# EUROPEAN PATENT SPECIFICATION

(11) **EP 0 990 171 B1**
(45) Date of publication and mention of the grant of the patent: **22.05.2002**
(21) Application number: 98929632.2
(22) Date of filing: 18.06.1998
(51) Int. Cl.: G01S 13/02, B65G 1/137

(54) **METHOD AND DEVICE FOR DETERMINING THE LOCATION OF OBJECTS**
VERFAHREN UND ANORDNUNG ZUR ORTSBESTIMMUNG VON GEGENSTÄNDEN
PROCEDE ET DISPOSITIF DE LOCALISATION D'OBJETS

(30) Priority: 20.06.1997 IT UD970108
(43) Date of publication of application: 05.04.2000
(73) Proprietor: Open Knowledge SNC di Pignat, Peresson, Luciani & C., 33170 Pordenone (IT)
(72) Inventor: LUCIANI, Federico, I-33100 Udine (IT)
(74) Representative: Gotra, Stefano
(86) International application number: IT9800164
(87) International publication number: WO9859258

(56) References cited:
- EP-A- 0 203 687
- EP-B- 0 681 549
- WO-A-92/09054
- DE-U- 9 206 737
- FR-A- 2 592 012
- GB-A- 2 152 335
- US-A- 5 721 421
- US-A- 5 786 764
- PATENT ABSTRACTS OF JAPAN vol. 010, no. 360 (M-541), 3 December 1986 & JP 61 155104 A (TOSHIBA CORP), 14 July 1986
- PATENT ABSTRACTS OF JAPAN vol. 097, no. 009, 30 September 1997 & JP 09 116495 A (NIPPON TELEGR &TELEPH CORP <NTT>), 2 May 1997

## Description

### Technical Field

The present invention relates to a method for rapidly locating objects, in particular objects positioned inside warehouses or the like, as well as a device for its realisation.

Nowadays the material stored in warehouses is turned over very frequently in order to reduce, or in any case to limit, the costs deriving from material already purchased, which does not contribute to income generation because it lies on the shelves of the warehouse. For this reason warehouse operators today are forced to load and/or off-load goods in the warehouse even several times a day.

Such a way to manage the warehouse, however, is able to be cost-effective only if the times required to move the goods are short. Otherwise, the economic advantage obtainable by frequent inventory turnover would be penalised by the need to assign additional personnel in order to maintain intervention times within limits deemed reasonable.

The problem to be solved therefore is to speed up the warehouse operator's intervention in order to abbreviate search times.

In the past, warehouse management depended almost exclusively on the warehouse operator's ability to memorise the location of the objects.

### Background Art

Currently, two different solutions to this problem exist, one automated and one manual.

The first prior art solution provides for the use of fully automated warehouses wherein a self-propelled robot guided by a computer handles loading and off-loading operations. However, this solution is not widespread because it is extremely complex and costly.

The second solution, definitely more economical and hence widely used, provides for assigning a univocal identity code and a univocal location to each of the objects present in the warehouse. In this way the warehouse operator is provided with a plan of the warehouse that helps him/her identify the exact position of each of the items present therein. The identity code is applied to the object using adhesive labels or the like or employing, for instance, the known bar code system. Over time, the warehouse operator memorises an ever increasing number of positions of the goods, thus progressively shortening the time required for their subsequent searches.

Note therefore that even in the presence of accurate maps, the warehouse operator will have the strong tendency to memorise the lay-out of the warehouse, thereby compromising any future re-positioning of the stored objects. The heavy use of memory by the warehouse operator, though over time it does speed up the operation of locating the goods, is thus harmful because it makes the position of the goods in the warehouse practically inalterable. Therefore it is not possible to take into account typically seasonal factors or increases or contractions in the number of items stored in the warehouse, without forfeiting at least in part the location speed already attained by the warehouse operator.

In the case of non-automated warehouses, it thus frequently occurs that the warehouse operator assumes an ever growing importance over time, which makes him or her, in extreme cases, irreplaceable and absolutely essential.

This second prior art solution therefore requires a very particular human intervention and it is strongly influenced also by the skills of the person who performs the operations.

Moreover, this type of object location is, of necessity, always arbitrary in that it depends exclusively by the skill of the warehouse operator.

The main disadvantage of this solutions therefore is its strict dependence on the warehouse operator's ability correctly to memorise the lay-out of the warehouse.

Additionally, search time is inversely proportional to the warehouse operator's seniority.

A further drawback is linked to the high number of errors made by the warehouse operator to locate the objects. On the average, the margin for error is quantifiable between 5 and 10%. Considering that to each error corresponds a second action aimed at restoring the correct situation, it is easily understood that in terms of costs this physiological error assumes extremely large proportions.

Yet another drawback connected with this prior art solution is due to the warehouse operator's need to consult his/her paper or electronic notes while conducting the searches, to read the list of items to be drawn and/or to read the exact number of specimens to be drawn for each item. It should not be overlooked that the experienced warehouse operator groups together, whenever possible, all the orders received to fulfil them at the same time, in order to limit the number of accesses to the long shelves of his/her warehouse. Each "excursion" therefore corresponds to a decidedly high number of items to be drawn, hence practically impossible to memorise.

Lastly, an additional severe drawback is linked to the lighting of the warehouse which is often insufficient, making the work even more difficult for the assigned personnel.

The prior art comprises EP 0 681 549 which discloses a method for locating objects each provided with its own univocal recognition code. The method comprises at least the following operating phases. A signal is emitted into the space where the objects are positioned. The signal comprises at least the code of an object to be located. The emitted signal is received by at least one of the objects. An indicator is activated on the objects whose code is contained in the emitted signal.

The prior art also comprises EP 0 203 687 wherein an inquiry system is provided for detecting the location of a selected object. An answering device, which is provided on each object to be selected, has its own identifying address which responds to a detecting command transmitted from a controller device.

### Disclosure of Invention

The object of the present invention therefore is to overcome the mentioned drawbacks manifested by prior art solutions, making available a method for the location of objects and the related device, able to simplify the search for objects positioned in warehouses or the like.

An additional object is considerably to reduce the level of knowledge of the warehouse required of its warehouse operator in order to locate within reasonable times the objects contained therein.

Yet another object is to shorten the learning times required by a new warehouse operator before being able to operate on the warehouse in a rapid, assured and uninhibited manner.

Another object of the invention is to allow the automatic or semi-automatic management of the list of items to locate, in order further to ease the task of the warehouse operator.

Another object is to indicate to the warehouse operator, in an extremely simple manner, also the number of units to be drawn or to be stored for each item.

Another object is to render marginal the importance of lighting within the warehouse.

Not the least object, lastly, is to allow the warehouse operator rapidly to log the number of items actually drawn and to take down any notes pertaining to each of the located items.

This and other objects besides are all attained by a method and device for identifying the location of objects as described in the claims that follow.

### Description of the drawings

Additional features and advantages of the present inventions shall become more readily apparent from the detailed description that follows of a preferred embodiment, shown purely by way of non limiting indication in the accompanying drawings wherein:
- Figure 1 shows a schematic overall view of a warehouse provided with the device constituting the subject of the present invention;
- Figure 2 schematically shows the functions provided for the portable transmitter.

### Description of the Illustrative embodiment

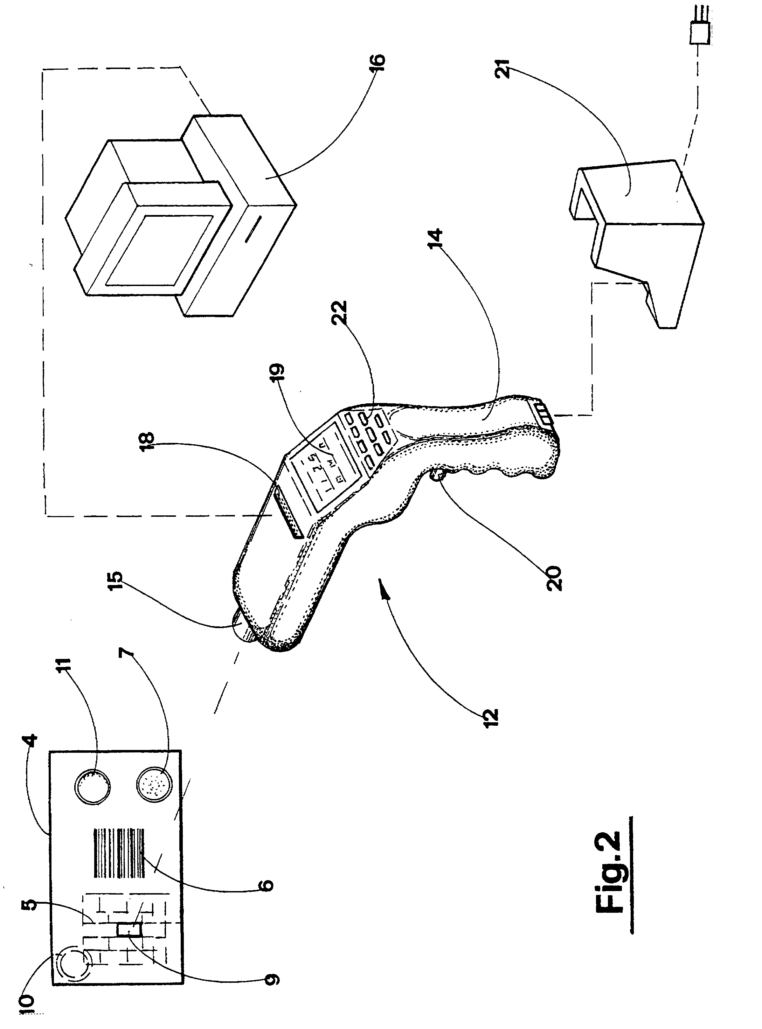

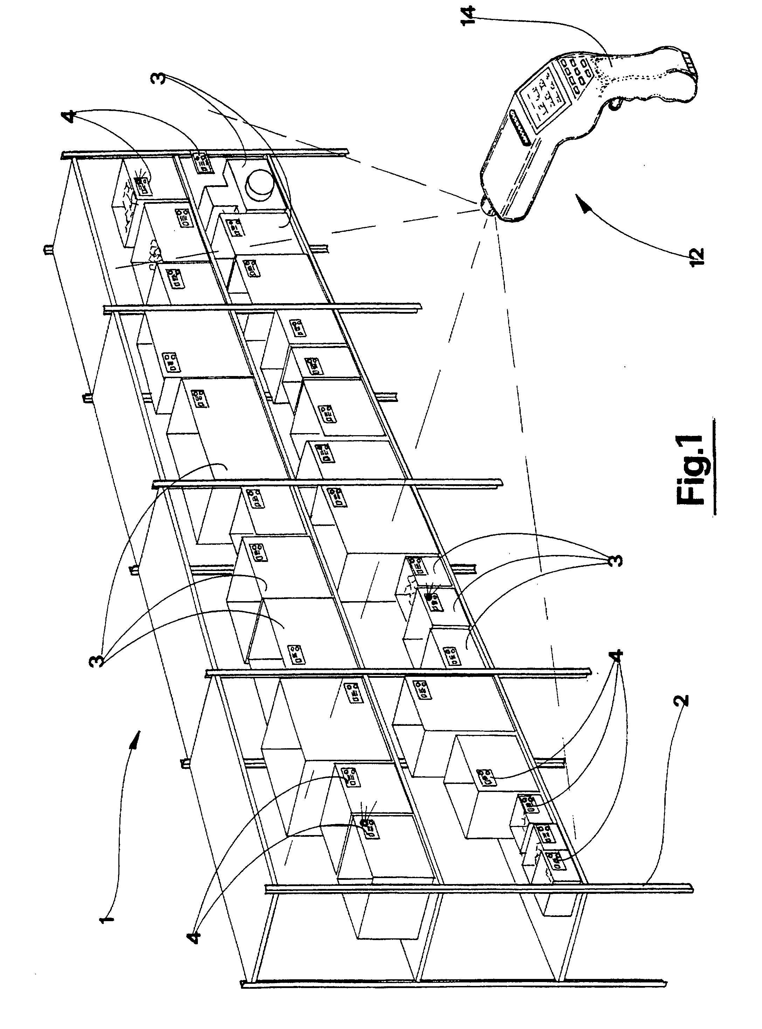

With particular reference to Figure 1, the number 1 indicates a warehouse in its entirety.

The warehouse 1 comprises a plurality of shelves 2 whereon are positioned objects or items 3 arranged individually, or grouped within box-like containers, as shown in Figure 1, if they are identical to each other.

To each item or group of identical items is associated a small tag 4 which may be applied on the shelf, in correspondence with each item or as shown, directly onto the container that groups together identical items 3.

Irrespective of the disposition chosen, the important matter is that to each item corresponds its own tag 4.

Each of the tags 4 comprises:
- the numeric code of the item, written using, for instance, the known bar code 6;
- a small, low cost receiver 5;
- at least one small LED-type light 7.

The receiver 5 comprises:
- at least one photoelectric cell 9 sensitive to infrared rays, possibly fitted with a fish-eye lens for the reception of signals from high angles;
- a logic for transforming the signals coming from the photoelectric cell 9 into numeric or alphanumeric codes;
- a predefined code to assign to the receiver 5 its univocal code coinciding (for the sake of simplicity) with the one displayed by the bar code 6 and different from the one assigned to all other tags 4;
- a logic for the recognition of its own code within a circular list of codes detected by the photoelectric cell 9;
- a circuit for turning on and powering the LED 7, which can also disable the receive mode of the receiver 5;
- a timer to turn off the LED 7 after a predefined time which can also re-enable the receiver 5 in receive mode;
- a battery 10 able to guarantee the operation of the receiver 5 and of the light 7 for a predefined average duration.

The assignment of a univocal code to each tag 4, or to the receiver 5, can occur through the use of the known printed circuit strips to be interrupted or by any other means suitable for the purpose, such as dip-switches, jumpers, or the like, or by storing it on EEPROMs or the like.

Obviously, the correct operation of the present invention requires that no double codes exist, as is also required by the conventional management of prior art warehouses.

The logic for the recognition of its own code within a circular list of codes coming from the photoelectric cell 9 has the purpose of allowing tag 4 to recognise autonomously whether its own code, i.e. the one corresponding to the bar code 6 applied frontally, is among the codes received by its receiver 5.

The term "circular list of codes" here means simply a sequence of codes that is repeated several times so that the same code is transmitted on or more times.

The battery 10 is selected according to the maximum duration it can guarantee to the tag 4, which can for instance be over one year. Before the expiration of such maximum duration it shall be appropriate to replace and/or recharge all the batteries of the tags 4 in order to assure their correct operation at all times.

The tags 4 can comprise, depending on their use, also a small lighted display 11 able to show additional information obtained during the reception of the codes, such as the number of specimens to be drawn for each code.

The receiver 5 can further be provided with a test operating mode, able exclusively to activate the lights 7 and the lighted display 11 in order to verify the proper operation of the tags 4 and to determine the presence of batteries 10 still sufficiently charged. It may also be possible to show the level of charge of the battery 10 on the display 11.

Each of the tags 4 can comprise on its rear a self-adhesive band, or any other suitable means (not shown) to simplify its application onto the items 3 or the shelves 2.

The device according to the present invention further comprises an infrared rays transmitter 12 to be combined with the tags 4 just described, comprising:
- a programmable microprocessor;
- a memory to store the codes and any quantities referred to each code, to be transmitted;
- at least one infrared emitting LED 15, or the like, able to transmit a signal distinguishable from environmental interference within a radius of at least 10 metres and with an angular diffusion of at least 30 degrees;
- possibly a device for transforming the signals coming from an external computer 16 connected with its I/O port 18, into signals suitable for writing or to reading on said memory.

In the embodiment shown in Figure 2, the transmitter 12 is associated to a portable bar code reader 14, of a known kind, able to read, even at a distance, the bar codes 6 applied onto the tags 4. Such reader 14 also comprises a small display 19 for viewing information and possibly a keypad 22 for communicating with the transmitter 12.

In practice the transmitter 12 could comprise a common (pistol-type) handheld (computer) terminal suitably adapted to the indicated purpose.

The transmitter 12 can further comprise a receiver sensor (similar to the one installed on the receivers) able to inhibit transmission during the brief moment wherein other infrared emissions generated by other transmitters 12 (operated for instance by other personnel) are present in the space, in order to avoid interference due to collisions between transmissions. By providing each receiver 5 with an auxiliary recognition logic, able to discern between multiple transmitters 12 to identify which one of them has effected the transmission, and with a multi-colour light 7 (or multiple lights 7 of different colours) it is possible to enable the simultaneous use of multiple transmitters 12. In this way each transmitter 12 can be made unique by its own identity code, inserted in the circular list of codes, which is recognised by the receiver 5 that will enable different colours of the light 7 depending on the transmitter 12 which has generated the transmission. It is thus possible to let two or more technicians work in the warehouse simultaneously without thereby generating confusion or ambiguity, since each of them will be associated, for instance, with his/her own colour.

It is also possible to separate the bar code reader 14 from the transmitter 12, the latter being able to be installed in a fixed manner in the spaces of the warehouse, thereby reducing the weight of the unit which the warehouse operator needs to carry. Although it presents identical functionalities as the first one, this alternative solution is nonetheless costlier in its realisation.

After the mainly structural description provided above, let us now review the operation of the present invention.

Initially it is necessary to provide each individual item 3 present in the warehouse with its own unique recognition code, in a manner similar to those known in the art. This code shall subsequently be shown in a highly visible manner on each of the tags 4 using the known bar code.

The assignment of the same code reported by the bar code to the tags is accomplished by acting on the means provided for that end, for instance breaking off one or more tracks of a printed circuit board appropriately positioned on the label or, more conveniently, storing it directly on EEPROM, for instance by means of the transmitter 12 and an appropriate operating sequence.

Once the configuration phase of the tags 4, which entails the assignment of the recognition code, is complete, the tags are applied onto the shelves in the positions deemed most suitable, i.e. in positions possibly close to the items, on the container of the items or on the shelves. What is important is that the tag 4 is not covered by the items themselves and that it is positioned in a clearly visible manner or anyway that it is reachable by the reflected infrared radiation.

At the end of this operation each item 3 of interest is fitted with its own tag 4 whereon its own identity code is reported in bars. The warehouse is ready for operations.

To locate the items thus placed in the warehouse, the warehouse operator shall previously prepare an appropriate list wherein at least the codes of each of the items to be located appear. This operation is accomplished preferably by employing an electronic computer already present and used, for instance, to manage the warehouse but, if necessary, the list can also be prepared manually or with the use of other means suitable for the purpose.

When the list of items to be located is ready, it is sent to the transmitter 12 using the I/O interface 18 or it may entered manually into the memory of the transmitter, typing the codes with the aid of its small keypad 22.

If the tags 4 used are of the type comprising the additional display 11, the list may comprise for each code even one or more auxiliary information item, such as the number of articles to be drawn/deposited for each code.

When all the codes to be located have been entered into the transmitter 12 integrated in the reader 14, it is necessary to go into the warehouse before starting the transmission by acting, for instance, on a push-button 20 of the reader 14. In case of fixed system, it is sufficient to confirm the transmission by acting on an appropriate push-button (not shown) and moving into the warehouse only subsequently.

The outcome shall be the same in either case, i.e. the tags 4 involved in the transmission, that is to say those whose code is identical to one of the transmitted ones, shall activate their LED 7 in order to be recognised by the warehouse operator. In case of receivers fitted with display 11, the latter shall show the additional information, such as the number of elements to be deposited or drawn. In case of devices provided with the logic able to recognise the device that effected the transmission, the display can occur in different colours depending on the transmitter used by the operator.

In essence the operating principle of the device is as follows: the transmitter emits a single signal containing the list of all objects to be located and the receivers involved, i.e. those whose code is contained in the transmitted list, "raise their hand" to be recognised. The particularity of the transmission is that it contains, grouped in a single list, all the codes of the sought items.

The warehouse operator will now be faced with a warehouse wherein the items sought have turned on the light incorporated in their tag (possibly in the colour associated with the transmitter used).

In this way the search phase is eliminated because the items to be located autonomously made themselves clearly distinguishable from the others. The warehouse operator will be able to approach each of the activated receivers and read with his/her bar code reader 14 the code of the lighted item. The transmitter display may show, in addition to the code read, also the description of the item, the quantity of items to be drawn or to be inserted and any information previously stored in its memory.

By pressing an additional key of the reader 12, the warehouse operator will be able to confirm the withdrawal or deposit, thereby determining the elimination of the code from the stored list. In this way the light will no longer be turned on in case of a new activation of the transmitter 12.

The timer 8 in any case turns off the lights 7 after a certain period of time to prevent the batteries of the receiver from being discharged needlessly. It could be hypothesised, for instance, that during the locating operations the warehouse operator may have to answer the telephone or perform some other more urgent task and thus not be able to complete his/her work, or that, the list of codes to be sent being long, the downloading/uploading operations for certain codes may require an excessively long time.

Since the transmit power of the portable transmitter 12 may not always be sufficient to cover the entire warehouse, the transmission shall be repeated several times in different areas of the warehouse.

The batteries of the pistol 14 can be recharged using a charging base 21 known in the art.

The signal emitted by the transmitter 12 can be of the type with rapid circular list, thus constituted by a sequence repeated over time, comprising each of the codes to be located separated from the following code in a recognisable manner. In this way if a receiver 5 does not detect its own code within the signal on the first pass, it shall have time to do so at one of the subsequent repetitions of the code.

Obviously the use of the bar code can be replaced with other similar systems or with simple captions which the warehouse operator may read and report manually on his/her pistol without the aid of automatic readers.

Moreover, the LED 7 can be replaced with a sound indicator, such as a buzzer, or by another indicator able to attract attention such as, for instance, a lighted display.

Lastly it is also possible to hypothesise that the code displayed by the bar code is different from the one stored by the tag. In this case it will be sufficient to take this fact into account this fact when programming the device, through the use, for instance, of a small data base able to convert one code into the other.

A further modification could also entail the employment of radio frequency transmission instead of infrared transmission. In this way a small receiver (based on RF TAG technologies) could be used instead of the infrared receiver, obtaining a greater operating radius and a higher transmission speed.

Yet another modification could pertain to the power supply to the tags 4, which could comprise a quick fitting terminal for electrical connection to a very low voltage external power supply cable running along the shelves.

The described invention further comprises electrical and electronic devices not shown and described because they fall within the known art.

Naturally the invention thus conceived can be subject to numerous other modifications and variations, without thereby departing the scope of the inventive concept which characterises it.

## Claims

1. Method for locating objects each provided with its own univocal recognition code, comprising at least the following operating phases:
- emission of a signal into the space where the objects are positioned, said signal comprising at least the code of an object to be located;
- reception of said emitted signal by at least one of the objects;
- activation of an indicator on the objects whose code is contained in said emitted signal;
**characterised in that** each object has a written code and **in that** the method further comprises at least the following operating phases, to be repeated for each of the objects that have activated their own indicator:
- reading with a portable code reader the written code of the object that has activated its own indicator;
- deactivating the indicator of that object;
- removing the code of that object from the signal to be emitted.

2. Method according to claim 1, **characterised in that** said signal comprises at least the codes of all the objects (3) to be located.

3. Method according to claim 2, **characterised in that** the codes are emitted in rapid succession, one after the other.

4. Method according to claim 3, **characterised in that** said rapid succession of the codes is repeated several times within the signal.

5. Method according to claim 1, **characterised in that** said signal comprises for each code also at least one auxiliary item of information.

6. Method according to claim 5, **characterised in that** said auxiliary information comprises the number of objects to be located for each code.

7. Method according to claim 1, **characterised in that** the written code of each object is a bar code.

8. Method according to claim 6, **characterised in that** it further comprises at least the following operating phases, to be repeated for each of the objects that have activated their own indicator:
- reading the code of the object that has activated its own indicator;
- storing the number of objects actually located;
- deactivating the indicator of that object;
- removing the code of that object from the signal to be emitted.

9. Method according to claim 7 or 8, **characterised in that** it further comprises at least the following operating phase:
- displaying a description pertaining to the object that has activated its own indicator.

10. Device for locating objects particularly suited to implement the method as per claim 1, comprising:
- a transmitter (12) able to emit the signal containing at least the codes of the objects (3) to be located;
- a receiver (5) associated to each object (3) to be located, able to detect the emitted signal and to identify the presence in the signal of the code of the object (3) whereto it is associated;
- indicator means (7) associated to the receiver (5) of each object (3) to be located able to attract the attention of an operator when they are activated;
**characterised in that** said transmitter (12) is portable and **in that** it comprises a written code reader (14).

11. Device according to claim 10, **characterised in that** said receiver (5) comprises:
- at least one photoelectric cell (9) sensitive to infrared rays;
- a device for transforming the signals coming from the photoelectric cell (9) into numeric or alphanumeric codes;
- a device for storing a predefined code in order to assign to the receiver (5) its own univocal numeric or alphanumeric code;
- a device for recognising the code of the receiver (5) within a circular list of codes detected by the photoelectric cell (9);
- a circuit for turning on and supplying power to the indicator means (7);
- a timer for turning off the indicator means (7) after a predefined time.

12. Device according to claim 10, **characterised in that** said transmitter (12) comprises:
- a programmable microprocessor;
- a memory to store the codes and any auxiliary information pertaining to each of the objects (3) to be located;
- at least one infrared emitting LED diode (15) able to transmit a signal comprising the code of all the objects (3) to be located, distinguishable from the environmental interference in a radius of at least 10 metres and with an angular diffusion of at least 30 degrees;
- a possible device for transforming the signals coming from an external computer (16) connected with its I/O port (18), into signals suitable for writing or reading on said memory.

13. Device according to claim 10, **characterised in that** said transmitter (12) further inserts within the signal emitted also a univocal code identifying the transmitter itself (12); said receiver (5) turning on said indicator (7) also according to said univocal code, for instance varying its colour.

14. Device according to claim 10 or 13, **characterised in that** said indicator means comprise a light (7), or a multicolour light, or multiple lights of different colours, or an alphanumeric display.

15. Device according to claim 10, **characterised in that** to said receiver (5) is further associated the code of the object written as a bar code (6).

16. Device according to claim 10, **characterised in that** to said receiver (5) is further associated a display 11 for displaying auxiliary information.

17. Device according to claim 16, **characterised in that** said auxiliary information comprises the state of charge of the battery of the receiver (5).

18. Device according to claim 10, **characterised in that** the code reader is a bar code reader (14).

19. Device according to claim 10, **characterised in that** said transmitter (12) further comprises a viewer (19) to display a pre-stored description associated to the last bar code read.

20. Device according to claim 19, **characterised in that** said viewer (19) is further able to display an auxiliary item of pre-stored information associated to the last bar code read.

21. Device according to claim 10, **characterised in that** said transmitter (12) further comprises a keypad (22) for entering the data to be stored.

22. Device according to claim 10, **characterised in that** said transmitter (12) comprises an I/O device (18) for its connection to electronic processors or the like.

## Patentansprüche

1. Verfahren zur Ortsbestimmung von Gegenständen, jeder versehen mit einem eindeutigen Erkennungscode, enthaltend wenigstens die folgenden Betriebsphasen:
- Aussenden eines Signals in den Bereich, in welchem sich die Gegenstände befinden, wobei das genannte Signal wenigstens den Code von einem zu lokalisierenden Gegenstand enthält;
- Empfang des genannten ausgesandten Signals durch wenigstens einen der Gegenstände;
- Aktivierung eines Anzeigers an den Gegenständen, deren Code in dem genannten ausgesandten Signal enthalten ist;
**dadurch gekennzeichnet, dass** jeder Gegenstand einen geschriebenen Code enthält, und dadurch, dass das Verfahren ausserdem wenigstens die folgenden Betriebsphasen umfasst, die an jedem der Gegenstände, der seinen eigenen Anzeiger aktiviert hat, wiederholt werden:
- Ablesen mit einem tragbaren Lesegerät des geschriebenen Codes von dem Gegenstand, der seinen eigenen Anzeiger aktiviert hat;
- Entaktivierung des Anzeiger von jenem Gegenstand;
- Entfernen des Codes jenes Gegenstandes aus dem auszusendenden Signal.

2. Verfahren nach Patentanspruch 1, **dadurch gekennzeichnet, dass** das genannte Signal wenigstens die Codes aller zu lokalisierenden Gegenstände (3) enthält.

3. Verfahren nach Patentanspruch 2, **dadurch gekennzeichnet, dass** die Codes in schneller Folge einer nach dem anderen ausgesandt werden.

4. Verfahren nach Patentanspruch 3, **dadurch gekennzeichnet, dass** die genannte schnelle Folge der Codes innerhalb eines Signals mehrmals wiederholt werden.

5. Verfahren nach Patentanspruch 1, **dadurch gekennzeichnet, dass** das genannte Signal für jeden Code auch wenigstens eine Zusatzinformation enthält.

6. Verfahren nach Patentanspruch 5, **dadurch gekennzeichnet, dass** die genannte Zusatzinformation die Zahl der Gegenstände enthält, die für jeden Code lokalisiert werden sollen.

7. Verfahren nach Patentanspruch 1, **dadurch gekennzeichnet, dass** der geschriebene Code eines jeden Gegenstandes ein Barrencode ist.

8. Verfahren nach Patentanspruch 6, **dadurch gekennzeichnet, dass** es ausserdem wenigstens die folgenden Betriebsphasen enthält, die an jedem der Gegenstände, der seinen eigenen Anzeiger aktiviert hat, wiederholt werden:
- Ablesen des Codes von dem Gegenstand, der seinen eigenen Anzeiger aktiviert hat;
- Speichern der Zahl der im Augenblick lokalisierten Gegenstände;
- Entaktivierung des Anzeigers an dem Gegenstand;
- Entfemen des Codes jenes Gegenstandes aus dem auszusendenden Signal.

9. Verfahren nach Patentanspruch 7 oder 8, **dadurch gekennzeichnet, dass** es ausserdem wenigstens die folgende Betriebsphase enthält:
- Sichtbarmachen einer Beschreibung betreffend den Gegenstand, der seinen eigenen Anzeiger aktiviert hat.

10. Vorrichtung zur Ortsbestimmung von Gegenständen, insbesondere geeignet zum Durchführen des Verfahrens nach Patentanspruch 1, enthaltend:
- einen Sender (12), in der Lage, das wenigstens die Codes der zu lokalisierenden Gegenstände (3) enthaltende Signal auszusenden;
- einen Empfänger (5), zugeordnet einem jeden zu lokalisierenden Gegenstand (3) und in der Lage, das ausgesandte Signal zu erfassen und das Vorhandensein des Codes des Gegenstandes (3), welchem er zugeordnet ist, zu erkennen;
- Anzeigemittel (7), zugeordnet dem Empfänger (5) eines jeden zu lokalisierenden Gegenstandes (3) und in der Lage, die Aufmerksamkeit eines Bedienenden auf sich zu lenken, wenn sie aktiviert sind;
**dadurch gekennzeichnet, dass** der genannte Sender (12) tragbar ist, und dadurch, dass er einen Ableser für einen geschriebenen Code enthält.

11. Vorrichtung nach Patentanspruch 10, **dadurch gekennzeichnet, dass** der genannte Empfänger (5) wie folgt enthält:
- wenigstens eine, auf Infrarotstrahlen reagierende Photozelle (9);
- eine Vorrichtung zum Umwandeln der von der Photozelle (9) kommenden Signale in numerische oder alphanumerische Codes;
- eine Vorrichtung zum Speichern einer bestimmten Codierung, um dem Empfänger (5) seinen eigenen, eindeutigen numerischen oder alphanumerischen Code zuzuordnen;
- eine Vorrichtung zum Erkennen des Codes des Empfängers (5) innerhalb einer kreisförmigen Liste von Codes, die von der Photozelle (9) erfasst werden;
- einen Aktivier- und Speisungskreis für die Anzeigemittel(7);
- einen Zeitschalter zum Abschalten der Anzeigemittel (7) nach einer bestimmten Dauer.

12. Vorrichtung nach Patentanspruch 10, **dadurch gekennzeichnet, dass** der genannte Sender (12) wie folgt enthält:
- einen programmierbaren Mikroprozessor;
- einen Speicher zum Speichern der Codes und jeder Zusatzinformation, die mit jedem der zu lokalisierenden Gegenstände (3) zusammenhängt;
- wenigstens eine Infrarot aussendende Leuchtdiode (15), in der Lage, ein Signal enthaltend den Code aller zu ortenden Gegenstände (3) auszusenden, unterscheidbar von den Umweltstörungen in einem Radius von wenigstens 10 Meter und mit einer Winkelausstrahlung von wenigstens 30 Grad;
- eine mögliche Vorrichtung zum Umwandeln der von einem mit seinem Eingang/Ausgang (18) angeschlossenen, externen Computer (16) kommenden Signale in Signale, die zum Schreiben oder Lesen in dem genannten Speicher geeignet sind.

13. Vorrichtung nach Patentanspruch 10, **dadurch gekennzeichnet, dass** der genannte Sender (12) in das ausgesandte Signal auch einen eindeutigen Code zum Erkennen des Senders (12) selbst einfügt; wobei der genannte Empfänger (5) den genannten Anzeiger (7) auch Je nach dem genannten eindeutigen Code aktiviert, zum Beispiel durch Veränderung der Farbe.

14. Vorrichtung nach Patentanspruch 10 oder 13, **dadurch gekennzeichnet, dass** die genannten Anzeigemittel eine Lampe (7) oder eine mehrfarbige Lampe oder mehrere Lampen von verschiedenen Farben oder ein alphanumerisches Display enthalten.

15. Vorrichtung nach Patentanspruch 10, **dadurch gekennzeichnet, dass** dem genannten Empfänger (5) ausserdem der als Barrencode (6) geschriebene Code des Gegenstandes zugeordnet ist.

16. Vorrichtung nach Patentanspruch 10, **dadurch gekennzeichnet, dass** dem genannten Empfänger (5) ausserdem ein Display (11) zur Sichtbarmachung der Zusatzinformation zugeordnet ist.

17. Vorrichtung nach Patentanspruch 16, **dadurch gekennzeichnet, dass** die genannte Zusatzinformation den Ladezustand der Batterie des Empfängers (5) enthält.

18. Vorrichtung nach Patentanspruch 10, **dadurch gekennzeichnet, dass** der Code-Ableser ein Barrencode-Ableser (14) ist.

19. Vorrichtung nach Patentanspruch 10, **dadurch gekennzeichnet, dass** der genannte Sender (12) ausserdem einen Bildschirm (19) enthält, um die vorher gespeicherte und dem zuletzt abgelesenen Barrencode zugeordnete Beschreibung anzuzeigen.

20. Vorrichtung nach Patentanspruch 19, **dadurch gekennzeichnet, dass** der genannte Bildschirm (19) weiter in der Lage ist, eine Angabe der vorher gespeicherten Zusatzinformation anzuzeigen, die dem zuletzt abgelesenen Barrencode zugeordnet ist.

21. Vorrichtung nach Patentanspruch 10, **dadurch gekennzeichnet, dass** der genannte Sende (12) ausserdem eine Tastatur (22) zur Eingabe von zu speichernden Daten enthält.

22. Vorrichtung nach Patentanspruch 10, **dadurch gekennzeichnet, dass** der genannte Sender (12) eine Eingang-/Ausgangsvorrichtung (18) für seinen Anschluss an elektronische Prozessoren oder ähnliches enthält.

## Revendications

1. Un procédé pour la localisation d'objets, chacun d'entre eux étant pourvu de son propre code univoque de reconnaissance, comprenant au moins les phases opératives suivantes:
- émission d'un signal dans l'espace où sont positionnés les objets, ledit signal comprenant au moins le code d'un objet devant être localisé;
- réception dudit signal émis par au moins l'un des objets;
- activation d'un indicateur sur les objets dont le code est contenu dans ledit signal émis;
**caractérisé en ce que** chaque objet présente un code écrit et **en ce que** le procédé comprend de plus au moins les phases opératives suivantes, devant être répétées pour chacun des objets qui ont activé leur propre indicateur:
- lecture, avec un lecteur de code portable, du code écrit de l'objet qui a activé son propre indicateur;
- désactivation de l'indicateur de cet objet;
- élimination du code de cet objet dans le signal devant être émis.

2. Un procédé selon la revendication 1, **caractérisé en ce que** ledit signal comprend au moins les codes de tous les objets (3) devent être localisés.

3. Un procédé selon la revendication 2, **caractérisé en ce que** les codes sont émis en rapide succession, l'un après l'autre.

4. Un procédé selon la revendication 3, **caractérisé en ce que** ladite rapide succession des codes est répétée plusieurs fois à l'intérieur du signal.

5. Un procédé selon la revendication 1, **caractérisé en ce que** ledit signal comprend pour chaque code également au moins une information auxiliaire.

6. Un procédé selon la revendication 5, **caractérisé en ce que** ladite information auxiliaire comprend le nombre d'objets devant être localisés pour chaque code.

7. Un procédé selon la revendication 1, **caractérisé en ce que** le code écrit de chaque objet est un code-barre.

8. Un procédé selon la revendication 6, **caractérisé en ce qu'**il comprend de plus au moins les phases opératives suivantes, devant être répétées pour chacun des objets qui ont activé leur propre indicateur:
- lecture du code de l'objet qui a activé son propre indicateur;
- mémorisation du nombre d'objets effectivement localisés;
- désactivation de l'indicateur de cet objet;
- élimination du code de cet objet dans le signal devant être émis.

9. Un procédé selon la revendication 7 ou 8, **caractérisé en ce qu'**il comprend de plus au moins la phase opérative suivante:
- visualisation d'une description relative à l'objet qui a activé son propre indicateur.

10. Dispositif de localisation d'objets particulièrement adapté pour mettre en application le procédé de la revendication 1, comprenant:
- un transmetteur (12) pouvant émettre le signal contenant au moins les codes des objets (3) devant être localisés;
- un récepteur (5) associé à chaque objet (3) devant être localisé, pouvant détecter le signal émis et identifier la présence dans le signal du code de l'objet (3) auquel il est associé;
- des moyens indicateurs (7) associés au récepteur (5) de chaque objet (3) devant être localisé, pouvant attirer l'attention d'un opérateur lorsqu'ils sont activés;
**caractérisé en ce que** ledit transmetteur (12) est portable et **en ce qu'**il comprend un lecteur de code (14).

11. Un dispositif selon la revendication 10, **caractérisé en ce que** ledit récepteur (5) comprend:
- au moins une cellule photoélectrique (9) sensible aux rayons infrarouges;
- un dispositif pour transformer les signaux venant de la cellule photoélectrique (9) en des codes numériques ou alphanumériques;
- un dispositif pour mémoriser un code prédéfini de manière à assigner au récepteur (5) son code univoque numérique ou alphanumérique;
- un dispositif pour reconnaître le code du récepteur (5) dans une liste circulaire de codes détectés par la cellule photoélectrique (9);
- un circuit pour activer et alimenter en puissance les moyens indicateurs (7);
- un timer pour désactiver les moyens indicateurs (7) après un temps prédéfini.

12. Un dispositif selon la revendication 10, **caractérisé en ce que** ledit transmetteur (12) comprend:
- un microprocesseur programmable;
- une mémoire pour mémoriser les codes de toute information auxiliaire relative à chacun des objets (3) devent être localisés;
- au moins une diode LED (15) à émission infrarouge pouvant transmettre un signal comprenant le code de tous les objets (3) devant être localisés, pouvant être distingué des interférences environnementales dans un rayon d'au moins 10 mètres et avec une diffusion angulaire d'au moins 30 degrés;
- un éventuel dispositif pour transformer les signaux venant d'un ordinateur externe (16) relié à sa porte I/O (18), en des signaux aptes à l'écriture ou lecture sur ladite mémoire.

13. Un dispositif selon la revendication 10, **caractérisé en ce que** ledit transmetteur (12) insère en outre à l'intérieur du signal émis un code univoque identifiant le transmetteur (12); ledit récepteur (5) activant ledit indicateur (7) également en fonction dudit code univoque, par exemple en variant sa couleur.

14. Un dispositif selon la revendication 10 ou 13, **caractérisé en ce que** lesdits moyens indicateurs comprennent une lumière (7), ou une lumière multicolore, ou de multiples lumières de différentes couleurs, ou un écran alphanumérique.

15. Un dispositif selon la revendication 10, **caractérisé en ce qu'**est également associé audit récepteur (5) le code de l'objet écrit comme un code-barre (6).

16. Un dispositif selon la revendication 10, **caractérisé en ce qu'**est également associé audit récepteur (5) un écran (11) pour la visualisation d'informations auxiliaires.

17. Un dispositif selon la revendication 16, **caractérisé en ce que** lesdites informations auxiliaires comprennent l'état de la charge de la batterie du récepteur (5).

18. Un dispositif selon la revendication 10, **caractérisé en ce que** le lecteur du code est un lecteur de code-barre (14).

19. Un dispositif selon la revendication 10, **caractérisé en ce que** ledit transmetteur (12) comprend de plus un viseur (19) pour visualiser une description pré-mémorisée associée au dernier code-barre lu.

20. Un dispositif selon la revendication 19, **caractérisé en ce que** ledit viseur (19) est de plus capable de visualiser une information auxiliaire pré-mémorisée associée au dernier code-barre lu.

21. Un dispositif selon la revendication 10, **caractérisé en ce que** ledit transmetteur (12) comprend de plus un clavier (22) pour entrer les données devant être mémorisées.

22. Un dispositif selon la revendication 10, **caractérisé en ce que** ledit transmetteur (12) comprend un dispositif I/O (18) pour sa connexion à des processeurs électroniques ou similaires.
